# FASCICULE DE BREVET EUROPEEN

(11) **EP 1 890 467 B1**
(45) Date de publication et mention de la délivrance du brevet: **03.10.2012**
(21) Numéro de dépôt: 07291006.0
(22) Date de dépôt: 13.08.2007
(51) Int. Cl.: H04M 1/03, H04M 1/60

(54) **Dispositif de communication à écoute amplifiée omnidirectionelle**
Kommunikationsvorrichtung mit verstärktem, allseitigem Hörempfang
Communication device with omnidirectional amplified listening

(30) Priorité: 18.08.2006 FR 0607383
(43) Date de publication de la demande: 20.02.2008
(73) Titulaire: SAGEMCOM BROADBAND SAS, 92500 Rueil Malmaison (FR)
(72) Inventeur: Bourgoin, Gilles, 92500 RUEIL MALMAISON (FR); Moulai, Mohand, 92500 RUEIL MALMAISON (FR)
(74) Mandataire: Fruchard, Guy

(56) Documents cités:
- WO-A-97/47117
- WO-A-2004/004408
- WO-A-2004/054211
- GB-A- 2 310 559
- US-A1- 2005 014 537

## Description

La présente invention concerne un dispositif de communication sans fil à écoute amplifiée omnidirectionnelle.

### ARRIERE PLAN DE L'INVENTION

On sait que les dispositifs de communication sans fil, qu'il s'agisse de dispositifs de communication de type DECT ou de type GSM, sont de plus en plus fréquemment équipés d'une écoute amplifiée permettant à un utilisateur de participer à une communication téléphonique sans être contraint de maintenir le dispositif de communication contre son oreille.

Afin d'assurer une écoute amplifiée omnidirectionnelle tout en minimisant le risque de choc acoustique pour l'utilisateur dans le cas où il effectuerait un passage en écoute amplifiée alors que le dispositif de communication est près de son oreille, il est connu notamment du document US-A-5 909 490 de faire déboucher l'écoute amplifiée sur une face latérale du boîtier du dispositif de communication.

Par ailleurs, il est connu du document US 2005/014537 de réaliser un cloisonnement interne destiné à réduire le couplage acoustique entre deux haut-parleurs. Ce cloisonnement n'a aucun effet sur la diffusion du son vers l'extérieur.

Les dispositifs de communication proposés à ce jour ont donc des performances de diffusion relativement médiocres, en particulier lorsque le dispositif de communication présente de faibles dimensions conformément à la recherche permanente d'une miniaturisation des dispositifs de communication.

### OBJET DE L'INVENTION

Un but de l'invention est de proposer un dispositif de communication sans fil à écoute amplifiée omnidirectionnelle présentant des performances améliorées.

### RESUME DE L'INVENTION

En vue de la réalisation de ce but, on propose selon l'invention un dispositif de communication sans fil comportant un boîtier comprenant des faces principales réunies par une face latérale, un écouteur disposé sur une face principale et un haut-parleur monté à l'intérieur du boîtier de façon adjacente à un espace débouchant dans des ouvertures traversant la face latérale du boîtier, un élément de cloison s'étendant en regard des ouvertures traversant la paroi latérale du boîtier, pour former un conduit en zigzag entre le haut-parleur et ces ouvertures, l'élément de cloison étant disposé pour que le son émis par le haut-parleur subisse des réflexions multiples et débouche des orifices selon des directions multiples.

Ainsi, on améliore le caractère omnidirectionnel de la diffusion du son émis par le haut-parleur.

Selon une version avantageuse de l'invention, le dispositif comporte une enceinte acoustique ayant une paroi portant le haut-parleur.

Ainsi, l'enceinte acoustique provoque une diffusion des signaux émis par le haut-parleur selon une direction privilégiée vers l'espace débouchant dans la face latérale du boîtier de sorte que le dispositif présente des performances de diffusion améliorées.

Selon une autre caractéristique avantageuse de l'invention, le boîtier comporte deux demi coques, l'une des demi coques ayant une partie formant une paroi de fond de l'enceinte acoustique, l'enceinte acoustique comportant de préférence une paroi latérale en une seule pièce avec la paroi de fond. On réalise ainsi une enceinte acoustique rigide améliorant encore les performances de diffusion du son.

### BREVE DESCRIPTION DES DESSINS

D'autres caractéristiques et avantages de l'invention apparaîtront encore à la lecture de la description qui suit d'un mode de réalisation préféré non limitatif de l'invention, en référence aux figures ci-jointes parmi lesquelles :

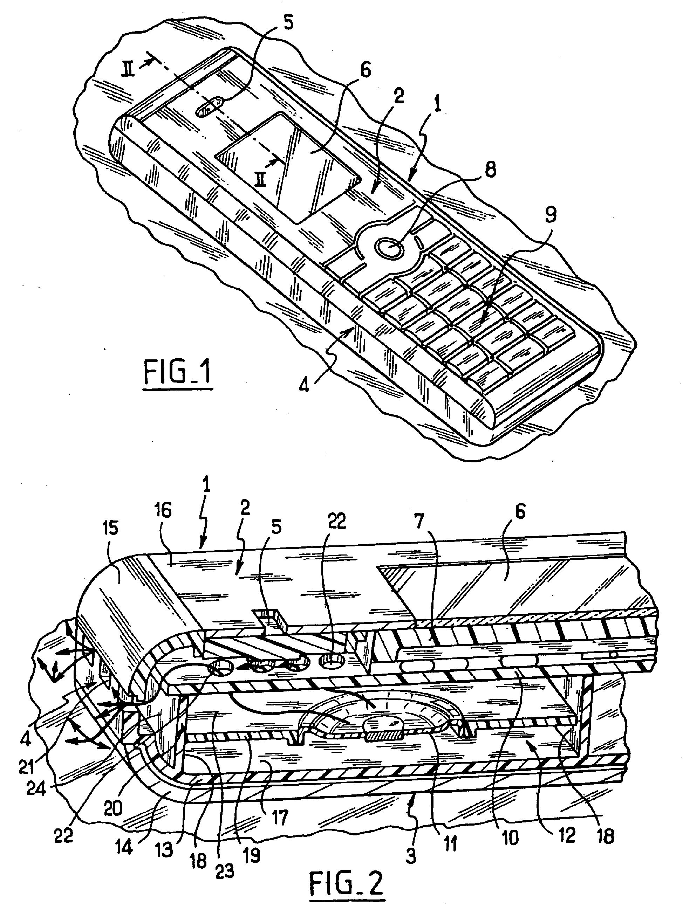

- la figure 1 est une vue en perspective schématique d'un dispositif de communication selon l'invention, posé à plat sur une surface,
- la figure 2 est une vue en coupe partielle très agrandie selon la ligne II-II de la figure 1.

### DESCRIPTION DETAILLEE DE L'INVENTION

En référence aux figures, le dispositif de communication selon l'invention comprend de façon connue en soi un boîtier 1 comportant une face principale avant 2 et une face principale arrière 3 réunie par une face latérale 4. Sur sa face avant, le dispositif de communication comporte un écouteur 5, un écran 6 associé à un afficheur 7, un microphone 8 et un clavier 9, ces différents composants étant reliés à une unité de gestion centrale portée par une carte à circuit imprimé 10 à laquelle est également relié un haut-parleur 11 formant l'un des composants d'une écoute amplifiée du dispositif de communication.

Selon l'invention, le haut-parleur 11 est associé à une enceinte acoustique 12 s'étendant à l'intérieur du boîtier. On entend par enceinte acoustique au sens de l'invention une enceinte comportant de façon connue en soi un volume adapté pour améliorer les performances acoustiques du haut-parleur associé dans une bande de fréquences donnée, cette enceinte acoustique pouvant être soit une enceinte étanche soit une enceinte reliée à l'extérieur par un ou plusieurs évents ayant des dimensions appropriées pour réaliser avec l'enceinte un résonateur de Helmholtz.

Dans le mode de réalisation illustré, le boîtier '1 comporte une demi coque arrière 13 partiellement recouverte d'une parure 14 et une demi coque avant 15 partiellement recouverte d'une parure 16, les parures 14 et 16 pouvant faire office de couvercle pour recouvrir certains composants du dispositif de communication, notamment les batteries servant à l'alimentation du dispositif de communication.

A son extrémité adjacente à l'enceinte acoustique 12, la demi coque arrière 13 comporte des ouvertures 21 traversant la face latérale 4 du boîtier 1.

Dans ce mode de réalisation, l'enceinte acoustique 12 comporte une paroi de fond 17 formée par une partie de la paroi de fond de la demi coque arrière 13, et une paroi latérale 18 réalisée en une seule pièce avec la paroi de fond 17 lors du moulage de la demi coque arrière 13. La paroi avant 19 de l'enceinte acoustique 12 est formée par une plaque fixée de façon étanche à la paroi latérale 18, par exemple par collage, et comportant une ouverture dans laquelle le haut-parleur 11 est fixé. La paroi avant 19 de l'enceinte acoustique 12 délimite avec la demi coque avant 15 un espace 23 dans lequel le son diffuse.

L'enceinte acoustique 12 a de préférence une forme aplatie de sorte qu'en combinaison avec sa position adjacente à la face principale 3 opposée à la face principale 2 portant l'écouteur 5 l'espace 23 a un volume maximum, ce qui favorise la diffusion du son tout en minimisant l'épaisseur totale du dispositif de communication.

La paroi latérale 18 est prolongée par un élément de cloison en une seule pièce avec la paroi latérale 18. L'élément de cloison 20 entoure le haut-parleur 11 et son bord sert d'appui pour la plaque à circuit imprimé 10 qui y est fixée par exemple par des vis ou par collage.

Par ailleurs, sur une partie de sa surface en regard de l'espace 23, la plaque 10 est ajourée par des trous 22 laissant passer le son et le bord extrême de la plaque ajourée 10 s'étend en surplomb par rapport à l'élément de cloison 20 pour former une chicane adjacente aux orifices 21. Le son provenant du haut-parleur 11 est ainsi diffusé dans un conduit en zigzag 24 délimité par l'élément de cloison 20 et la paroi latérale de la demi coque avant 15. Le son émis par le haut-parleur 11 subit ainsi des réflexions multiples sur les différents éléments de paroi de sorte qu'il débouche des orifices 21 selon des directions multiples illustrées par des flèches en trait épais sur la figure. En outre, la forme aplatie de l'enceinte acoustique 12 permet de réaliser un dispositif de communication généralement plat qui repose naturellement sur la face principale arrière 3 de sorte que les ondes sortant des orifices 21 subissent sur la surface sur laquelle le dispositif de communication repose une réflexion supplémentaire qui favorise la diffusion omnidirectionnelle et augmente le niveau du son.

Bien entendu, l'invention n'est pas limitée au mode de réalisation décrit et on peut y apporter des variantes de réalisation sans sortir du cadre de l'invention tel que défini par les revendications.

En particulier, bien que l'enceinte acoustique ait été illustrée sous une forme totalement intégrée à une des demi coques formant le boîtier, l'enceinte acoustique peut être associée au haut-parleur 11 selon un ensemble amovible à l'intérieur du boîtier.

En outre, bien que l'invention ait été illustrée avec une plaque à circuit imprimé 10 qui s'étend sensiblement sur toute la longueur du dispositif de communication, ce qui permet de maximiser les dimensions de l'antenne du dispositif de communication, la plaque à circuit imprimé peut également être réalisée de façon à permettre un passage direct du son depuis le haut-parleur 11 jusque dans le conduit délimité par l'élément de cloison 20 et la demi coque avant 15.

## Revendications

1. Dispositif de communication sans fil comportant un boîtier (1) comprenant des faces principales (2, 3) réunies par une face latérale (4), un écouteur (5) disposé sur une face principale et un haut-parleur (11) monté à l'intérieur du boîtier de façon adjacente à un espace (23) débouchant dans des ouvertures (21) traversant la face latérale (4) du boîtier, **caractérisé en ce qu'**il comporte un élément de cloison (20) s'étendant en regard des ouvertures (21) traversant la paroi latérale (4) du boîtier, pour former un conduit en zigzag (24) entre le haut-parleur (11) et ces ouvertures (21), l'élément de cloison étant disposé pour que le son émis par le haut-parleur subisse des réflexions multiples et débouche des orifices selon des directions multiples.

2. Dispositif selon la revendication 1, **caractérisé en ce qu'**il comporte une enceinte acoustique (12) ayant une paroi (19) portant le haut-parleur (11).

3. Dispositif selon la revendication 1, **caractérisé en ce qu'**en regard du haut-parleur (11), il comporte une plaque (10) ajourée par des trous (22).

4. Dispositif selon la revendication 1 et la revendication 3, **caractérisé en ce que** la plaque ajourée (10) s'étend en surplomb par rapport à l'élément de cloison (20) pour former une chicane.

5. Dispositif selon la revendication 1, **caractérisé en ce que** l'enceinte acoustique (12) a une forme aplatie.

6. Dispositif selon la revendication 1, **caractérisé en ce que** l'enceinte acoustique (12) est adjacente à une face principale (3) opposée à la face principale (2) portant l'écouteur (5).

7. Dispositif selon la revendication 1, **caractérisé en ce que** le boîtier comporte deux demi coques (13, 15), l'une (15) des demi coques ayant une partie formant une paroi de fond (17) de l'enceinte acoustique (12).

8. Dispositif selon la revendication 7, **caractérisé en ce que** l'enceinte acoustique comporte une paroi latérale (18) en une seule pièce avec la paroi de fond (17).

9. Dispositif selon la revendication 8, **caractérisé en ce que** le haut-parleur (11) est porté par une paroi (19) fixée à la paroi latérale (18) de l'enceinte acoustique.

10. Dispositif selon la revendication 1 et la revendication 8, **caractérisé en ce que** l'élément de cloison (20) s'étend dans le prolongement de la paroi latérale (18) en une seule pièce avec celle-ci.

## Claims

1. A wireless communications device comprising a casing (1) having main faces (2, 3) joined together by a side face (4), an earpiece (5) arranged in one of the main faces, and a loudspeaker (11) mounted inside the casing adjacent to a space (23) leading to openings (21) passing through the side face (4) of the casing, the device being **characterized in that in that** it includes a partition element (20) extending in register with the openings (21) passing through the side wall (4) of the casing to form a zigzag duct (24) between the loudspeaker (11) and the openings (21), the partition element being arranged so that the sound emitted by the loudspeaker is subjected to multiple reflections and passes out through the orifices in multiple directions.

2. A device according to claim 1, **characterized in that** it includes a sound box (12) having a wall (19) carrying the loudspeaker (11).

3. A device according to claim 1, **characterized in that** it includes a plate (10) perforated with holes (22), the plate being located in register with the loudspeaker (11).

4. A device according to claim 1 and claim 3, **characterized in that** the perforated plate (10) extends over the partition element (20) in order to form a baffle.

5. A device according to claim 1, **characterized in that** the sound box (12) is of flat shape.

6. A device according to claim 1, **characterized in that** the sound box (12) is adjacent to a main face (3) opposite from the main face (2) including the earpiece (5).

7. A device according to claim 1, **characterized in that** the casing comprises two half-shells (13, 15), one of the half-shells (15) having a portion forming a bottom wall (17) of the sound box (12).

8. A device according to claim 7, **characterized in that** the sound box includes a side wall (18) integral with the bottom wall (17).

9. A device according to claim 8, **characterized in that** the loudspeaker (11) is carried by a wall (19) fastened to the side wall (18) of the sound box.

10. A device according to claim 1 and claim 8, **characterized in that** the partition element (20) extends in line with the side wall (18) and is integral therewith.

## Patentansprüche

1. Vorrichtung zur drahtlosen Kommunikation, bestehend aus einem Gehäuse (1), das Hauptflächen (2, 3) umfasst, die über eine Seitenfläche (4) verbunden sind, einer auf einer Hauptfläche angeordneten Hörmuschel (5) und einem Lautsprecher (11), der im Gehäuseinneren angrenzend an einen Raum (23) eingebaut ist, der in Öffnungen (21) mündet, die die Seitenfläche (4) des Gehäuses durchsetzen, **dadurch gekennzeichnet, dass** sie ein Wandelement (20) aufweist, das sich gegenüber den Öffnungen (21) erstreckt, die die Seitenwand (4) des Gehäuses durchziehen, um zwischen dem Lautsprecher (11) und diesen Öffnungen (21) eine Zickzackleitung zu bilden, wobei das Wandelement so angeordnet ist, dass der vom Lautsprecher abgegebene Ton multiple Reflexionen erfährt und entlang multipler Richtungen durch die Öffnungen austritt.

2. Vorrichtung nach Anspruch 1, **dadurch gekennzeichnet, dass** sie eine Akustikkammer (12) aufweist, die eine Wand (19) besitzt, die den Lautsprecher (11) trägt.

3. Vorrichtung nach Anspruch 1, **dadurch gekennzeichnet, dass** sie gegenüber vom Lautsprecher (11) eine Platte (10) aufweist, die von Löchern (22) durchbrochen ist.

4. Vorrichtung nach Anspruch 1 und 3, **dadurch gekennzeichnet, dass** sich die durchbrochene Platte (10) über das Wandelement (20) hinaus erstreckt, um eine Schikane zu bilden.

5. Vorrichtung nach Anspruch 1, **dadurch gekennzeichnet, dass** die Akustikkammer (12) eine abgeflachte Form hat.

6. Vorrichtung nach Anspruch 1, **dadurch gekennzeichnet, dass** sich die Akustikkammer (12) angrenzend an eine Hauptfläche (3) befindet, die der Hauptfläche (2), die die Hörmuschel (5) trägt, gegenüberliegt.

7. Vorrichtung nach Anspruch 1, **dadurch gekennzeichnet, dass** das Gehäuse aus zwei Halbschalen (13, 15) besteht, wobei die eine Halbschale (15) einen Abschnitt besitzt, der eine Bodenwand (17) der Akustikkammer (12) bildet.

8. Vorrichtung nach Anspruch 7, **dadurch gekennzeichnet, dass** die Akustikkammer eine mit der Bodenplatte (17) einstückige Seitenwand (18) aufweist.

9. Vorrichtung nach Anspruch 8, **dadurch gekennzeichnet, dass** der Lautsprecher (11) von einer Wand (19) getragen wird, die an der Seitenwand (18) der Akustikkammer befestigt ist.

10. Vorrichtung nach Anspruch 1 und 8, **dadurch gekennzeichnet, dass** sich das Wandelement (20) in Verlängerung der Seitenwand (18) einstückig mit dieser erstreckt.
